# EUROPEAN PATENT APPLICATION

(11) **EP 3 355 202 A1**
(43) Date of publication of application: **01.08.2018**
(21) Application number: 17208691.0
(22) Date of filing: 19.12.2017
(51) Int. Cl.: G06F 17/27, G06Q 50/18

(54) **CLAIM DISASSEMBLING AND RECORDING DEVICE**

(30) Priority: 26.01.2017 TW 106103109
(71) Applicant: Integral Search International Limited, Taipei City 11063 (TW)
(72) Inventor: TSAI, Hong-Shin, 11063 Taipei City (TW)
(74) Representative: Morris, Jonathan Paul

(57) **Abstract**

Disclosed is a claim disassembling and recording device (1) for reading a definition content of a claim to obtain an element noun definition and recording the element noun definition, comprising: an element definition obtaining module (11) that reads the definition content of the claim to identify a noun-initial word on a basis of a part of speech database and a part of speech separating rule and then reads an intermediate determining word and/or a separating word to obtain the element noun definition; an element noun definition recording module (13) that obtains an element noun definition attribute tag to which the element noun definition belongs and sequentially records the element noun definition and the element noun definition attribute tag to a NoSQL database (16) in a sequence that the definition content of the claim is read.

## Description

### FIELD OF THE INVENTION

The present invention relates to a claim disassembling and recording device, and more particularly relates to a device which disassembles a claim to obtain element noun definitions and definition descriptions, and thereafter records the element noun definitions and the definition descriptions to a NoSQL database.

### BACKGROUND OF THE INVENTION

A patent claim is the core of patent specification defining with components including element noun definitions (i.e., a subject matter, a primary element noun and a secondary element noun) and definition description (i.e., an interrelated definition between two element noun definitions). However, a patent claim is with complicated relationships not only among element noun definitions but also among the element noun definitions and the definition descriptions to thus make a patent claim difficult to read and understood. Even though after a patent claim has been roughly understood by a patent reader, the patent reader still requires to take notes for performing a technical analysis over the patent claim. Therefore, it will be greatly helpful if a patent claim is with a detailed hierarchical structure whose element nouns definitions and the definition descriptions have been arranged and clearly displayed according to their structural meaning.

Until now, it has not found any technology to display a detailed hierarchical structure of claims. The inventor of the present invention has discovered that part of speech relationship is a great solution to apply to retrieve element noun definition (i.e., a subject matter, a primary element noun and a secondary element noun) and definition description (i.e., an interrelated definition between two element noun definitions) from a claim to achieve this purpose. The prior claim disassembling techniques are very simple. One of conventional techniques related to claim disassembling technique is to divide claims into an independent claim and dependent claims. Furthermore, other techniques related to claim disassembling are Taiwan Patent nos. I347561 and I400621, which requires to build a huge word database for comparing every individual word retrieved from a patent claim to all words in the database. The words in the database is required to be collected and thereafter stored in the database one by one before the words are used to verify the word of patent claims as an element noun definition. However, there are disadvantages as follows: (1) the need to establish a tremendous size of word database; (2) the need to establish individual complicated database respectively for element noun definition and definition description definition; (3) the need to continuously update the word database for adding any new element noun definitions and definition description definitions when new words not matching with the words stored in the word databases are found; (4) the need of a time-consuming verifying process since a comparison among the word of patent claims and the words previously prepared and stored in the word database is required if tens of billions words of claims which possess hundred millions of element noun definitions and definition descriptions to be identified are considered. Therefore, the above conventional techniques is not practical because of its complicate building and resource consuming. Therefore, the conventional techniques are not scientific and feasible. Accordingly, regarding the identification for a large amount of element noun definitions and definition descriptions in patent clams, there is a need to have an effective and feasible patent claim disassembling device.

In this regard, the inventor of the present invention has discovered that a part of speech relationship can be applied to efficiently retrieve element noun definitions and definition descriptions. That is, the part of speech relationship can be applied with advantages that only a limit number of part of speech data table is required, naming including data tables of "relative pronouns", "prepositions" and "ending marks of participles". In addition, the speed of word recognition by using part of speech relationship is fast. The present invention applies a part of speech relationship to uses a part of speech data tables and a part of speech separating rule to retrieve the element noun definitions and thereafter obtain the definition descriptions.

In addition, since there is a tremendous number of claims and even more tremendous number of element noun definitions and definition descriptions to be accessed, the data access speed should also be considered. In the conventional data storage technology, the processing data is stored in a normalized relational database, and is accessed by performing a jointing operation between/among different data tables. However, the use of normalized relational database for data storage of element noun definitions and definition descriptions has the following drawbacks: (1) it takes a significant amount of time to access this large number of the obtained element noun definitions and definition description in normalized relational database; (2) the relationship between/among different data tables which have a tremendous number of data also worsens the data accessing time; and (3) the time for performing an operation of "joint" or "union" takes a more significant amount of time. As a result, after the element noun definitions and definition descriptions are retrieved, storing data in a NoSQL database is with advantages of easy to use, fast to access and high applicability.

### SUMMARY OF THE INVENTION

Accordingly, one of the objectives of the present invention is to provide a claim disassembling and recording device that applies English part of speech relationship to efficiently retrieve element noun definitions and definition descriptions. That is, the English part of speech relationship can be applied with advantages that only a limit number of data tables is required, naming including the data tables of "relative pronouns", "prepositions" and "ending marks of participles" , etc., such that the word recognition is much faster. The present invention uses a part of speech database and a part of speech separating rule to retrieve the element noun definitions and thereafter the definition descriptions are obtained. In addition, the element noun definitions and the element noun definition attribute tags are recorded sequentially to the NoSQL database in order to accelerate data accessing time and simplify how the element noun definitions and the description definitions are stored.

In order to solve the problem with the conventional devices, the present invention provides a claim disassembling and recording device for reading a definition content of a claim to obtain an element noun definition and recording the element noun definition, comprising:
an element definition obtaining module that includes a processing unit which reads the definition content of the claim to identify a noun-initial word on a basis of a part of speech database and a part of speech separating rule, and then reads an intermediate determining word and/or a separating word to obtain the element noun definition, the intermediate determining word and the separating word being defined after the noun-initial word and being corresponded to the noun-initial word which are stored in a memory by the processing unit; and
an element noun definition recording module connected to the element definition obtaining module that includes a processing unit which obtains an element noun definition attribute tag to which the element noun definition belongs, and sequentially records the element noun definition and the element noun definition attribute tag to a NoSQL database in a sequence that the definition content of the claim is read.

In an embodiment of the present invention, the element noun definitions and the element noun definition attribute tags are directly recorded to the NoSQL database or are recorded in form of a file such that the file is sequentially recorded to the NoSQL database.

In an embodiment of the present invention, the element definition obtaining module further comprises an element noun definition combining unit which includes a processing unit that, on a basis of a combining words database, combines an element noun definition and a sequential element noun definition which follows the element noun definition to form a combined element definition which is stored in a memory by the processing unit.

In an embodiment of the present invention, the claim disassembling and recording device further comprises an interrelating definition obtaining module connected to the element definition obtaining module, and the interrelating definition obtaining module includes a processing unit that retrieves a definition description which follows the element noun definition so as to obtain the definition description as an interrelating definition which is stored in a memory by the central processing unit.

In an embodiment of the present invention, the claim disassembling and recording device further comprises an interrelating definition recording module connected to the element definition obtaining module, and the interrelating definition recording module includes a processing unit that sequentially records the interrelating definition and an interrelating definition attribute tag to a NoSQL database in a sequence that the definition content of the claim is read.

In an embodiment of the present invention, the element noun definition, the element noun definition attribute tag to which the element noun definition belongs, the interrelating definition, and the interrelating definition attribute tag to which the interrelating definition belongs are sequentially directly recorded to the NoSQL in a sequence that the definition content of the claim is read.

In an embodiment of the present invention, the element noun definition, the element noun definition attribute tag to which the element noun definition belongs, the interrelating definition, and the interrelating definition attribute tag to which the interrelating definition belongs are recorded in form of a file in a sequence that the definition content of the claim is read such that the file is recorded to the NoSQL database.

In an embodiment of the present invention, the element noun definition attribute tag is one selected from a group comprising a firstly defining element noun definition and a non-firstly defining element noun definition.

In an embodiment of the present invention, the interrelating definition attribute tag is one selected from a group comprising a present participle attribute tag, a past participle attribute tag, a preposition attribute tag, a relative pronoun attribute tag, a phase attribute tag, a verb attribute tag, a conjunction attribute tag, and an adverb attribute tag.

In the claim disassembling and recording device of the present invention, the following effect can be achieved: the part of speech relationship is applied to efficiently retrieve element noun definitions and definition descriptions. That is, the part of speech relationship can be applied with advantages that only a limit number of data tables is required, naming including the data tables of "relative pronouns", "prepositions" and "ending marks of participles" , etc., such that the word recognition is much faster. The present invention uses a part of speech database and a part of speech separating rule to retrieve the element noun definitions and thereafter the definition descriptions are obtained. In addition, the element noun definitions and the element noun definition attribute tags are recorded sequentially to the NoSQL database in order to simplify a storage process, speed up access to data, and ease future applications for the element noun definitions and the description definitions.

### BRIEF DESCRIPTION OF THE DRAWINGS

Fig. 1 is a block diagram of a claim disassembling and recording device according to one embodiment of the present invention; and
Fig. 2 is a logical table showing the claim disassembling and recording device according to the embodiment of the present invention.

### DETAILED DESCRIPTION OF THE PREFERRED EMBODIMENTS

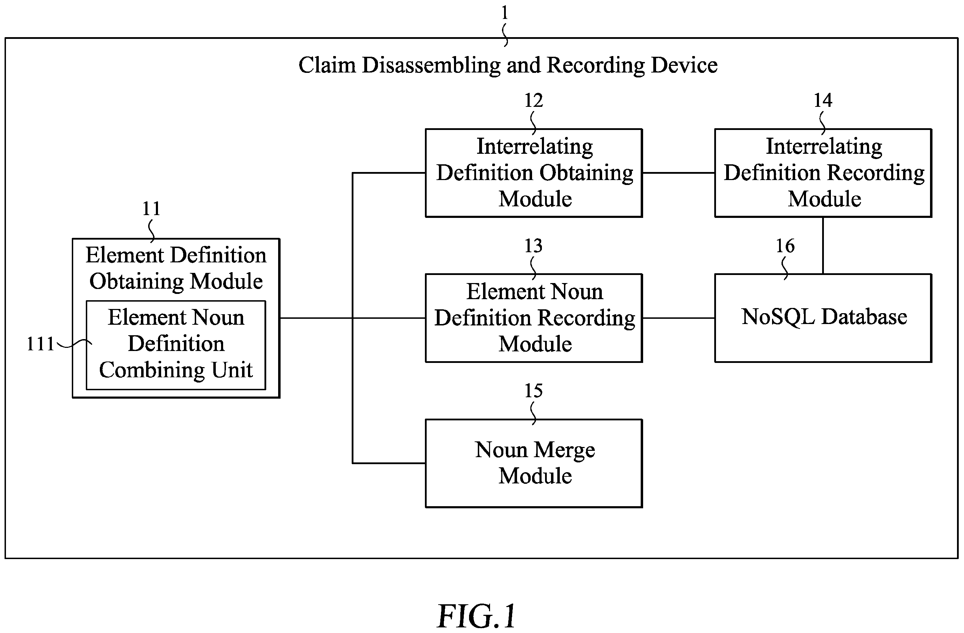

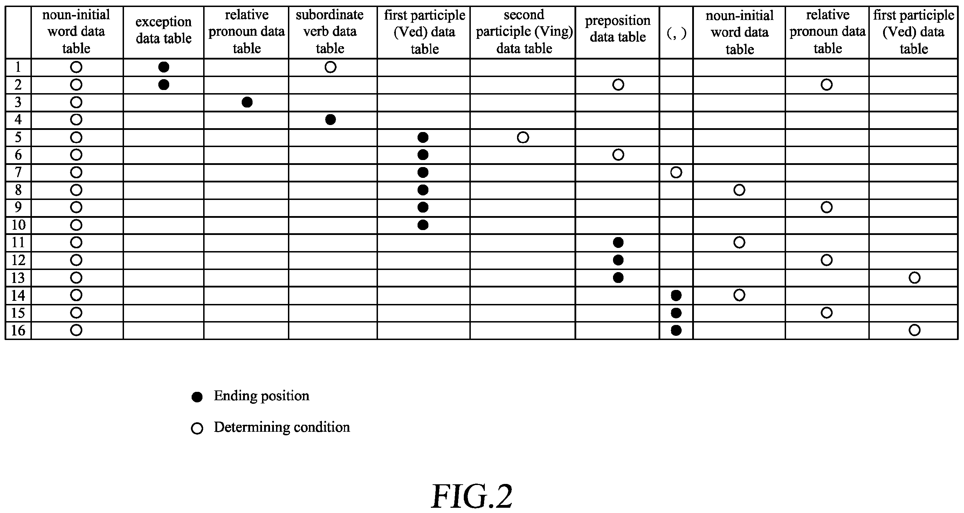

The preferred embodiment of the present invention is described in detail below according to Fig. 1 and Fig. 2. The description is used for explaining the embodiments of the present invention only, but not for limiting the scope of the claims.

As shown in Fig. 1, in one embodiment of the present invention, the claim disassembling and recording device 1 that reads a definition content of a claim to obtain an element noun definition and recording the element noun definition comprises: an element definition obtaining module 11 that reads the definition content of the claim to identify a noun-initial word such as "a", "an" or "the" on a basis of a part of speech database and a part of speech separating rule, and then reads an intermediate determining word and/or a separating word to obtain the element noun definition, the intermediate determining word and the separating word being defined after the noun-initial word and being corresponded to the noun-initial word. The reading operation of the element definition obtaining module 11 can be performed by a processor of the element definition obtaining module 11, and the read definition content can be stored in the memory of the element definition obtaining module 11. But the present invention is not limited to this. The reading operation of the element definition obtaining module 11 can be performed by a central processor of the disassembling and recording device 1, and the read definition content can be stored in the memory of the disassembling and recording device 1.

In the present invention, element noun definitions are obtained on a basis of a part of speech database and a part of speech separating rule. Hereinafter, the element definition obtaining module 11 in the claim disassembling and recording device 1 according to one embodiment of the present invention will be explained. In the following, all the operation and sub-operation can not only be performed by hardware of the disassembling and recording device 1 of the present invention, but also can be performed by a code stored in the memory of the disassembling and recording device 1 of the present invention.

As shown in Fig. 2, the part of speech database can be a data stored in a hardware of the disassembling and recording device 1. The part of speech database used in the present invention contains a plurality of part-of-speech data tables, including a noun-initial word data table, a relative pronoun data table, a subordinate verb data table, a past participle (Ved) data table, a present participle (Ving) data table, a preposition data table and a sentence separating mark data table. The noun-initial word data table contains the noun-initial words such as "A, a, An, an, the, the, Said, said, at least ..."; the relative pronoun data table contains the relative pronoun words such as "which, whose, where, wherein, where..."; the subordinate verb data table contains the subordinate verb words such as "is, are, was, were, comprises, comprising..."; the first participle (Ved) data table contains the first participle words such as "'provided' which are words ending in form of 'ed' or 'en'..."; The second participle (Ving) data table contains the second participle words such as "'providing' which are words ending in form of 'ing'... "; the preposition data table contains the preposition words such as "with, to, in, on, at, over, above, below, along, through, via, within, onto..."; the sentence separating mark data table contains punctuation marks. Please note that because the determination of part of speech is relatively simple which is only with only a few word with part of speech of prepositions, relative pronouns, subordinate verbs, etc., where the part of speech of some words such as participle can be determined by the forms of ending portion of a word, the database that is used to be compared with the word in patent claim can be greatly downsized.

The below operation can be performed by a processor of the element definition obtaining module 11, and the read definition content can be stored in the memory of the element definition obtaining module 11. But the present invention is not limited to this. The reading operation of the element definition obtaining module 11 can be performed by a central processor of the disassembling and recording device 1, and the read definition content can be stored in the memory of the disassembling and recording device 1. As shown in Fig 2, the element definition obtaining module 11 enables a central processer, not shown, to sequentially read the words of a claim. The words of the claim is read and stored in a memory of the element definition obtaining module 11. When a word belonging to the noun-initial word data table including "A, a, The, the, Said, said, at least..." is read, the position of the word is marked as the beginning of an element noun definition and is marked with "○" as shown in the second column of Fig. 1. The words following thereof are continued to be read to determine an end of the element noun definition. The above positions determination is performed by the central processor, not shown. Accordingly, taking the row indicated with No. 6 as an example, when a word with a part of speech of past participle such as "provided" is read, the position of the word "provided" is marked, which means the word "provided" is selected as a possible ending position by the central processor, not shown. When the word following the word "provided" is read and is with a part of speech of preposition such as "with", the position of the word "with" is marked with "○", which means the previously marked possible ending position, i.e., "provided", can be determined the central processor, not shown as an ending positions by being marked with "●" rather than a possible ending position. Therefore, the words before the ending position, i.e., "provided", are collected together with the beginning of an element noun definition such that the element noun definition is obtained by the central processor, not shown. The above determination can be performed by a processor of the element definition obtaining module 11, and the read definition content can be stored in the memory of the element definition obtaining module 11. But the present invention is not limited to this. The determining operation of the element definition obtaining module 11 can be performed by a central processor of the disassembling and recording device 1, and the read definition content can be stored in the memory of the disassembling and recording device 1.

The respective rows indicated with their respective numbers in Fig. 2 are explained below in sequence.

For rows indicated with Nos. 3 and 4, they can be explained as follows. After a "noun-initial word" is read by the central processor, not shown, when a subject word with part of speech belonging to the relative pronoun data table or the subordinate verb data table, the position of the subject word is determined as a separating position since marks of "●" are shown and there is not any mark of "○" found following the marks of "●" in the same row.

For rows indicated with Nos. 5 to 10, they can be explained as follows. After a "noun-initial word" is read by the central processor, not shown, when a subject word with part of speech belonging to a past participle data table is read by the central processor, not shown, the position of the subject word is marked which means the subject word is selected as a possible ending position. When the word following the subject word is read with a part of speech including "present participle", "preposition", ",", "noun-initial word", "relative pronouns", the position of the word is marked with "○" by the central processor, not shown, indicating that the previously marked possible ending position, i.e., "Verb-ed", can be determined as an ending positions by being marked with "●", rather than a possible ending position. Therefore, the words before the ending position, i.e., "Verb-ed", are collected together with the beginning of an element noun definition such that the element noun definition is obtained by the central processor, not shown.

For rows indicated with Nos.11 to 13, they can be explained as follows. After a "noun-initial word" is read by the central processor, not shown, when a subject word with part of speech belonging to a preposition data table is read, the position of the subject word is marked which means the subject word is selected as a possible ending position by the central processor, not shown. When the word following the subject word is read with a part of speech including "noun-initial word", "relative pronouns", "present participle" and "past participle" data tables, the position of the word is marked with "○" indicating that the previously marked possible ending position. The above determination can be performed by a processor of the element definition obtaining module 11, and the read definition content can be stored in the memory of the element definition obtaining module 11. But the present invention is not limited to this. The determining operation of the element definition obtaining module 11 can be performed by a central processor of the disassembling and recording device 1, and the read definition content can be stored in the memory of the disassembling and recording device 1.

The following explanation is an example when a content of claim "a circuit board provided with an edge extending in a longitudinal direction of said circuit board;" is processed by the central processor, not shown, of the present invention to obtain element noun definitions by applying the above separating rule. The below operation can be performed by a processor of the element definition obtaining module 11, and the read definition content can be stored in the memory of the element definition obtaining module 11. But the present invention is not limited to this. The reading operation of the element definition obtaining module 11 can be performed by a central processor of the disassembling and recording device 1, and the read definition content can be stored in the memory of the disassembling and recording device 1.
(1) "[a] circuit board provided with an edge extending in a longitudinal direction of said circuit board;" indicates the word "a" is read. , wherein a word in "[]" is the word being read. The read word "a" belongs to the noun-initial word data table.
(2) thereafter, a word "circuit" is read indicated by "a [circuit] board provided with an edge extending in a longitudinal direction of said circuit board;". Since the word "circuit" does not belong to any data tables, the process proceeds to the next word;
(3) thereafter, a word "board" is read indicated by "a circuit [board] provided with an edge extending in a longitudinal direction of said circuit board;". Since the word "board" does not belong to any data tables, the process proceeds to the next word;
(4) thereafter, a word "provided" is read indicated by "a circuit board [provided] with an edge extending in a longitudinal direction of said circuit board;". Since the word "provided" belongs to a past participle (Ved) data table, the process proceeds to the rows indicated with Nos. 5 to 10 in the separating logic table. However, the position of the past participle is determined to be an ending position depending on the word following the word of past participle. Therefore, the position of the past participle is marked which means the position of the past participle is selected as the possible ending position. Then the process proceeds to the next word;
(5) the word "with" is read, as indicated by "a circuit board provided [with] an edge extending in a longitudinal direction of said circuit board;". Since the word "with" belongs to the preposition data table, it found that the row indicated by No. 6 in the separating rule should be chosen such that it determines the position of the past participle is the separating position, and therefore the words between the noun-initial word, i.e., "a", and the first participle word, i.e., "provided", are retrieved to obtain an element noun definition as "a circuit board";
(6) the following word to be read is "an" indicated by "a circuit board provided with [an] edge extending in a longitudinal direction of said circuit board;". The word "an" belongs to a noun-initial word data table, therefore, the separating logic table is considered;
(7) the following word "edge" is read, indicated as "a circuit board provided with an [edge] extending in a longitudinal direction of said circuit board;". Since the word "edge" does not belong to any data table, therefore the process proceeds to the next word;
(8) the following word "extending" is read indicated by "a circuit board provided with an edge [extending] in a longitudinal direction of said circuit board; ". Since the word "extending" belongs to a present participle (Ving) data table, the process proceeds to the row indicated with No. 11 in the separating logic table. However, the position of the present participle is determined to be an ending position depending on the word following the word of present participle. Therefore, the position of the present participle is marked which it means that the position of the present participle is the possible ending position. Then the process proceeds to the next word;
(9) the following word "in" is read indicated as "a circuit board provided with an edge extending [in] a longitudinal direction of said circuit board;". Since the word "in" belongs to a preposition data table, the process proceeds to the row indicated with No. 11 in the separating logic table, where it determines the position of the present participle is the separating position such that the words between the noun-initial word, i.e., "a", and the present participle word, i.e., "extending", are retrieved to obtain an element noun definition as "an edge". Then the process proceeds to the next word;
(10) the following word thereof is "a" indicated by "a circuit board provided with an edge extending in [a] longitudinal direction of said circuit board;". The word "a" belongs to a noun-initial word data table, therefore, the separating logic table is considered;
(11) the following word " longitudinal " is read, indicated as " a circuit board provided with an edge extending in a [longitudinal] direction of said circuit board; ". Since the word "longitudinal" does not belong to any data table, therefore the process proceeds to the next word;
(12) the following word " direction " is read, indicated as " a circuit board provided with an edge extending in a longitudinal [direction] of said circuit board; ". Since the word " direction " does not belong to any data table, therefore the process proceeds to the next word;
(13) the word "of" is read, as indicated by " a circuit board provided with an edge extending in a longitudinal direction [of] said circuit board;". Since the word "of" belongs to the preposition data table, it found that the row indicated by No. 11 to 13 in the separating rule should be chosen. Therefore, the position of the preposition is marked which means the position of the preposition is the possible ending position. Then the process proceeds to the next word;
(14) the following word thereof is " said " indicated by " a circuit board provided with an edge extending in a longitudinal direction of [said] circuit board;". The word "said" belongs to a noun-initial word data table, and the row indicated by No. 11 in the separating rule should be chosen where it determines the position of the preposition is the separating position such that the words between the noun-initial word, i.e., "a", and the preposition, i.e., "of", are retrieved to obtain an element noun definition as "longitudinal direction". Then the process proceeds to the next word;
(15) the following word " circuit " is read, indicated as " a circuit board provided with an edge extending in a longitudinal direction of said [circuit] board; ". Since the word " circuit " does not belong to any data table, therefore the process proceeds to the next word;
(16) the following word " board " is read, indicated as " a circuit board provided with an edge extending in a longitudinal direction of said circuit [board]; ". Since the word " board " does not belong to any data table, therefore the process proceeds to the next word;
(17) the following word " ; " is read, indicated as " a circuit board provided with an edge extending in a longitudinal direction of said circuit board [ ; ]". Since the word " ; " is punctuation and belongs to a sentence separating mark data table. Therefore, the position of the punctuation is marked which means the position of the punctuation is the possible ending position such that the word "said circuit board" is retrieved to obtain an element noun definition as an element description.

After the processes below, the element noun definitions are obtained as follows by indicating with mark "[]":
"[a circuit board] provided with [an edge extending] in [a longitudinal direction] of [said circuit board];".Please note that in order to obtain the element noun definition more accurately, the element definition obtaining module 11 further includes an element noun definition combining unit 111 as shown in Fig. 1, which combines an element noun definition (e.g., "a longitudinal direction") and a sequential element noun definition (e.g., "said circuit board") according to word belonging to a combining word database, such as "of", to form a combined element definition (e.g., "a longitudinal direction of said circuit board"). Accordingly, the element noun definition that is combined are shown as follows by being indicated with "[]":
   "[a circuit board] provided with [an edge extension] in [a longitudinal direction of said circuit board]".

The above operation can be performed by a processor of element noun definition combining unit 111, and the combined definition content can be stored in the memory of the element noun definition combining unit 111. But the present invention is not limited to this. The combining operation of the element noun definition combining unit 111 can be performed by a central processor of the disassembling and recording device 1, and the combined definition content can be stored in the memory of the disassembling and recording device 1. Basically, the processor, not shown, performs a reading of claim to obtain the content of the claim. The content of the claim are then stored in the memory of the claim disassembling and recording device 1. The stored content is then fetched by the processor for the further operation. The operated result is stored back to the memory.

As shown in Fig. 1, the claim disassembling and recording device 1 of present invention further includes an interrelating definition obtaining module 12 connected to the element definition obtaining module 11 that retrieves a definition description defining by the processor, not shown after an the element noun definition obtained by the processor, not shown, of the element definition obtaining module 11 so as to obtain the definition description as an interrelating definition. In the above example, the interrelating definitions are indicated by marked within "(" and ")": "a circuit board (provided with) an edge (extending in) a longitudinal direction of said circuit board;".

The above operation can be performed by a processor of the interrelating definition obtaining module 12, and the grabbed definition description content can be stored in the memory of the interrelating definition obtaining module 12. But the present invention is not limited to this. The determining operation of the interrelating definition obtaining module 12 can be performed by a central processor of the disassembling and recording device 1, and the grabbed definition description content can be stored in the memory of the disassembling and recording device 1.

In a conventional searching database, the data is stored in a data table of a SQL database for accessing the data if needed. Therefore, a lot of data table have to be provided for data accessing. It leads access time needed when a plurality of data tables are involved for operation. However, in the claim disassembling and recording device 1 of present invention, the element noun definitions obtained by the processor, not shown, of the element definition obtaining module 11 and the element noun definition attribute tags are sequentially directly recorded to the NoSQL database 16, wherein the element noun definition attribute tag is a tag representing a structure attribute for the element noun definition in the claim. For example, an element noun definition is with a tag such as "& element description attribute tag", and an interrelating definition is with a tag such as "& interrelating definition attribute tag". The claim disassembling and recording device 1 of present invention comprises an element noun definition recording module 13 connected to the element definition obtaining module 11 and the NoSQL database 16 that enables the processor, not shown, to obtain the element noun definition attribute tag to which the element noun definition belongs, and sequentially enables the processor, not shown, to record the element noun definition and the element noun definition attribute tag to the NoSQL database 16 in a sequence that the definition content of the claim is read. The above operation can be performed by a processor of the element noun definition recording module 13, and the element noun definition and the element noun definition attribute tag can be stored in the NoSQL database 16 in the memory of the element noun definition recording module 13. But the present invention is not limited to this. The operation of the element noun definition recording module 13 can be performed by a central processor of the disassembling and recording device 1, and the element noun definition and the element noun definition attribute tag can be stored in the memory of the disassembling and recording device 1.

In another embodiment of the present invention, the element noun definitions and the element noun definition attribute tags are recorded by the processor, not shown, in the memory in form of a file such that the file is sequentially recorded to the NoSQL database 16. In addition, as shown in Fig. 1, the claim disassembling and recording device 1 of present invention further includes an interrelating definition recording module 14 connected to the element definition obtaining module 11 and the NoSQL database 16 that enables the processor, not shown, to sequentially record the interrelating definition obtained from the interrelating definition obtaining module 12 and an interrelating definition attribute tag to the NoSQL database 16 in a sequence that the definition content of the claim is read by the processor. The above operation can be performed by a processor of the interrelating definition recording module 14, and the interrelating definition and the element noun definition attribute tag can be stored in the NoSQL database 16 in the memory of the interrelating definition recording module 14. But the present invention is not limited to this. The operation of the interrelating definition recording module 14 can be performed by a central processor of the disassembling and recording device 1, and the interrelating definition and the element noun definition attribute tag can be stored in the memory of the disassembling and recording device 1.

Hereinafter, taking "a circuit board provided with an edge extending in a longitudinal direction of said circuit board;" as an example, the content of "{a circuit board &element description attribute tag} {provided with &interrelating definition attribute tag} {an edge &element description attribute tag} {extending in &interrelating definition attribute tag} {a longitudinal direction of said circuit board; & element description attribute tag}" are sequentially recorded to the NoSQL database or are recorded in form of a file such that the file is sequentially recorded to the NoSQL database.

It is noted that in the above example, the element noun definition, the element noun definition attribute tag to which the element noun definition belongs, the interrelating definition, and the interrelating definition attribute tag to which the interrelating definition belongs are sequentially recorded to the NoSQL in a sequence that the definition content of the claim is read. Alternatively, the element noun definition, the element noun definition attribute tag to which the element noun definition belongs, the interrelating definition, and the interrelating definition attribute tag to which the interrelating definition belongs are recorded in form of a file in a sequence that the definition content of the claim is read such that the file is recorded to the NoSQL database.

Next, one embodiment of the claim disassembling and recording device 1 of the present invention is described as below.

A claim is with definition content as follows: "An apparatus of controlling a robot, the apparatus comprising: an image obtaining unit configured to obtain a three-dimensional image of a user; a driving unit configured to drive an arm of the robot that is composed of a plurality of segments; and a control unit configured to generate a user module that corresponds to a motion of the joint of the user based on the three-dimensional image, to generate a target module having the plurality of segments of which the length varies based on the user module, and to allow the arm of the robot to be driven based on the target module."

The above definition content processed by the element definition obtaining module 11 and a noun merge module 15 connected to the element definition obtaining module 11 of the present invention is as follows, where the element description retrieved is represented within the mark of "[]", and the interrelating definitions are words not within the mark of []. "[An apparatus of controlling a robot], [the apparatus] comprising: [an image obtaining unit] configured to obtain [a three-dimensional image of a user]; [a driving unit] configured to drive [an arm of the robot] that is composed of [a plurality of segments]; and [a control unit] configured to generate [a user module] that corresponds to [a motion of the joint of the user] based on [the three-dimensional image], to generate [a target module] having [the plurality of segments] of which [the length] varies based on [the user module], and to allow [the arm of the robot] to be driven based on [the target module]".

The content to be sequentially recorded to the NoSQL database or are recorded in form of a file for being sequentially recorded to the NoSQL database is as follows.
"{An apparatus of controlling a robot, &element noun definition attribute tag} {the apparatus &element noun definition attribute tag} {comprising: &interrelating definition attribute tag} {an image obtaining unit &element noun definition attribute tag} {configured to obtain &interrelating definition attribute tag} {a three-dimensional image of a user; &element noun definition attribute tag} {a driving unit &element noun definition attribute tag} {configured to drive &interrelating definition attribute tag} {an arm of the robot &element noun definition attribute tag} {that is composed of &interrelating definition attribute tag} {a plurality of segments; &element noun definition attribute tag} {and &interrelating definition attribute tag} {a control unit &element noun definition attribute tag} {configured to generate &interrelating definition attribute tag} {a user module &element noun definition attribute tag} {that corresponds to &interrelating definition attribute tag} {a motion of the joint of the user &element noun definition attribute tag} {based on &interrelating definition attribute tag} {the three-dimensional image, &element noun definition attribute tag} {to generate &interrelating definition attribute tag} {a target module &element noun definition attribute tag} {having &interrelating definition attribute tag} {the plurality of segments &element noun definition attribute tag} {of which &interrelating definition attribute tag} {the length &element noun definition attribute tag} {varies based on &interrelating definition attribute tag} {the user module, &element noun definition attribute tag} {and to allow &interrelating definition attribute tag} {the arm of the robot &element noun definition attribute tag} {to be driven based on &interrelating definition attribute tag} {the target module. &element noun definition attribute tag}".

The above operation can be performed by a processor of the element definition obtaining module 11 and the noun merge module 15, and the result can be stored in the memory of the element definition obtaining module 11 and the noun merge module 15. But the present invention is not limited to this. The operation of the element definition obtaining module 11 and the noun merge module 15 can be performed by a central processor of the disassembling and recording device 1, and the result can be stored in the memory of the disassembling and recording device 1.

The above description is only an explanation of the preferred embodiments of the present invention. One having ordinary skill in the art can make various modifications according to the above description and the claims defined below. However, those modifications shall still fall within the scope of the present invention.

## Claims

1. A claim disassembling and recording device (1) that reads a definition content of a claim to obtain an element noun definition and thereafter records the element noun definition, the claim disassembling and recording device (1) comprising:
an element definition obtaining module (11) that includes a processing unit which reads the definition content of the claim to identify a noun-initial word on a basis of a part of speech database and a part of speech separating rule, and then reads an intermediate determining word and/or a separating word to obtain the element noun definition, the intermediate determining word and the separating word being defined after the noun-initial word and being corresponded to the noun-initial word which are stored in a memory by the processing unit; and
an element noun definition recording module (13) connected to the element definition obtaining module (11) and a NoSQL database (16) that includes a processing unit which obtains an element noun definition attribute tag to which the element noun definition belongs, and sequentially records the element noun definition and the element noun definition attribute tag to the NoSQL database (16) in a sequence that the definition content of the claim is read.

2. The claim disassembling and recording device (1) of claim 1, wherein the element noun definitions and the element noun definition attribute tags are directly recorded to the NoSQL database (16) or are recorded in form of a file such that the file is sequentially recorded to the NoSQL database (16).

3. The claim disassembling and recording device (1) of claim 1, wherein the element definition obtaining module (11) further comprises an element noun definition combining unit (111) which includes a processing unit that, on a basis of a combining words database, combines an element noun definition and a sequential element noun definition which follows the element noun definition to form a combined element definition which is stored in a memory by the processing unit.

4. The claim disassembling and recording device (1) of claim 1 further comprising an interrelating definition obtaining module (12) connected to the element definition obtaining module (11), and the interrelating definition obtaining module (12) includes a processing unit that retrieves a definition description which follows the element noun definition so as to obtain the definition description as an interrelating definition which is stored in a memory by the central processing unit.

5. The claim disassembling and recording device (1) of claim 4, further comprising an interrelating definition recording module (14) connected to the element definition obtaining module (11) and the NoSQL database (16), and the interrelating definition recording module (14) includes a processing unit that sequentially records the interrelating definition and an interrelating definition attribute tag to a NoSQL database (16) in a sequence that the definition content of the claim is read.

6. The claim disassembling and recording device (1) of claim 5, wherein the element noun definition, the element noun definition attribute tag to which the element noun definition belongs, the interrelating definition, and the interrelating definition attribute tag to which the interrelating definition belongs are sequentially directly recorded to the NoSQL (16) in a sequence that the definition content of the claim is read.

7. The claim disassembling and recording device (1) of claim 6, wherein the element noun definition, the element noun definition attribute tag to which the element noun definition belongs, the interrelating definition, and the interrelating definition attribute tag to which the interrelating definition belongs are recorded in form of a file in a sequence that the definition content of the claim is read such that the file is recorded to the NoSQL database (16).

8. The claim disassembling and recording device (1) of claim 6 or 7, wherein the element noun definition attribute tag is one selected from a group comprising a firstly defining element noun definition and a non-firstly defining element noun definition.

9. The claim disassembling and recording device (1) of claim 6 or 7, wherein the interrelating definition attribute tag is one selected from a group comprising a present participle attribute tag, a past participle attribute tag, a preposition attribute tag, a relative pronoun attribute tag, a phase attribute tag, a verb attribute tag, a conjunction attribute tag, and an adverb attribute tag.
